Europäisches Patentamt

(19) European Patent Office

Office européen des brevets

(11) EP 0 925 671 B1

(12) **FASCICULE DE BREVET EUROPEEN**

(45) Date de publication et mention
de la délivrance du brevet:
**19.01.2005 Bulletin 2005/03**

(21) Numéro de dépôt: **98936464.1**

(22) Date de dépôt: **07.07.1998**

(51) Int Cl.[7]: **H04L 25/03**

(86) Numéro de dépôt international:
**PCT/FR1998/001457**

(87) Numéro de publication internationale:
**WO 1999/003240 (21.01.1999 Gazette 1999/03)**

(54) **PROCEDE DE TRANSMISSION D'INFORMATIONS**

INFORMATIONSÜBERTRAGUNGSVERFAHREN

DATA TRANSMISSION METHOD

(84) Etats contractants désignés:
**DE GB IT NL**

(30) Priorité: **11.07.1997 FR 9708902**

(43) Date de publication de la demande:
**30.06.1999 Bulletin 1999/26**

(73) Titulaire: **Thales**
**92200 Neuilly Sur Seine (FR)**

(72) Inventeur: **SOUBARAS, Hélène,**
**Thomson-CSF Propriété Intellect.**
**F-94117 Arcueil Cedex (FR)**

(56) Documents cités:
**US-A- 5 263 033          US-A- 5 432 821**

- **CHUGG K M: "Acquisition Performance Of Blind Sequence Detectors Using Per-Survivor Processing" IEEE 47TH VEHICULAR TECHNOLOGY CONFERENCE, vol. 2, 4 - 7 mai 1997, pages 539-543, XP002059867 NY, USA**
- **GOTTMAN D M ET AL: "JOINT DECODING AND CARRIER PHASE ESTIMATION FOR TRELLIS CODE MODULATION" PROCEEDINGS OF THE MILITARY COMMUNICATIONS CONFERENCE (MILCOM), SAN DIEGO, NOV. 6 - 8, 1995, vol. VOL. 1, 6 novembre 1995, pages 303-308, XP000580792 INSTITUTE OF ELECTRICAL AND ELECTRONICS ENGINEERS**
- **RAHELI ET AL.: "Per-Survivor Processing: A General Approach to MLSE in Uncertain Enviroments" IEEE TRANSACTIONS ON COMMUNICATIONS, vol. 43, no. 2-4, février 1995 - avril 1995, pages 354-364, XP002059868 USA**
- **SESHADRI N: "JOINT DATA AND CHANNEL ESTIMATION USING FAST BLIND TRELLIS SEARCH TECHNIQUES" COMMUNICATIONS: CONNECTING THE FUTURE, SAN DIEGO, DEC. 2 - 5, 1990, vol. VOL. 3, no. -, 2 décembre 1990, pages 1659-1663, XP000218854 INSTITUTE OF ELECTRICAL AND ELECTRONICS ENGINEERS**

**Description**

L'invention concerne un procédé de transmission d'informations et notamment un procédé permettant de reconstituer des informations reçues à partir d'échantillons obtenus par échantillonnage à l'aide d'une horloge asynchrone par rapport au signal d'informations reçu. L'invention est plus particulièrement applicable à la lecture des enregistrements magnétiques dans les domaines des magnétoscopes, des périphériques informatiques et des enregistreurs spéciaux professionnels tels que les enregistreurs spatiaux.

Plus précisément, l'invention applique, pour une telle réception, une Estimation de Séquence par Maximum de Vraisemblance, que nous désignerons dans la suite de la description par MLSE (Maximum Likelihood Sequence Estimation) et qui utilise un algorithme de Viterbi décrit dans le document [1] indiqué en fin de description. L'algorithme MLSE est lui-même décrit dans le document [2] également indiqué en fin de description.

Dans les systèmes de communications numériques ou d'enregistrement magnétique, on introduit des données appartenant à un alphabet fini de taille M en entrée d'un canal qui les distord linéairement en ajoutant de l'Interférence Entre Symboles (IES). Pour le décodage à la réception (ou à la lecture) une technique connue est donc le décodage à maximum de vraisemblance utilisant l'algorithme de Viterbi (MLSE, soit Maximum Likehood Sequence Estimation) [2]. Cet algorithme consiste à calculer les métriques de Viterbi d'après les coefficients de la réponse impulsionnelle du canal, considérée comme un filtre RIF (Réponse Impulsionnelle Finie) en sortie duquel il y a bruit additif blanc Gaussien. La sortie $y_n$ du canal s'écrit en effet :

$$y_n = \sum_m x_{n-m} h_m + b_n \qquad\qquad (1)$$

où les $x_n$ sont les symboles d'entrée du canal, $h_n$ les coefficients de la réponse impulsionnelle du canal, et $b_n$ le terme de bruit additif. Pour une séquence d'entrée estimée $(x^*_n)$, on a la métrique

$$m(y, x^*, h) = \sum_n \left( y_n - \sum_m x^*_{n-m} h_m \right) \qquad\qquad (2)$$

Lorsque le canal n'est pas connu, ou s'il varie, ou si un de ses paramètres varie (par exemple l'erreur de date d'échantillonnage par rapport aux symboles), on peut rendre le MLSE adaptatif en appliquant une structure d'estimation du ou des paramètre(s) non connu(s) du canal, qui peut se faire en aveugle. Pour simplifier nous utiliserons par la suite le terme d'estimation de canal. Cette estimation peut se faire à partir des symboles déjà décodés donc avec un retard (voir document [3]) ou bien au cours des calculs des métriques de branche, par une technique qui a reçu le nom de Per-Survivor Processing (PSP) (voir document [4]).

Le PSP consiste à faire une estimation de canal par état de treillis de décodage. Pour chaque état, lorsqu'on cherche à déterminer le survivant, on prend un à un tous les candidats survivants, qui définiront chacun un chemin envisagé comme hypothèse de séquence d'entrée. Pour chaque hypothèse en s'appuyant sur les symboles d'entrée présumés du canal, on calcule la métrique correspondante. Puis on choisit comme survivant le candidat donnant la métrique totale minimale, et on retient comme estimation du canal celle qui correspond au survivant

La demande de brevet français n° 95 00967 (voir document [5]) applique le PSP à l'estimation d'un paramètre donné du canal, son erreur de date d'échantillonnage - sachant que le canal en continu est connu - en utilisant pour l'estimation de ce paramètre un algorithme spécifique.

Dans le document [6], l'estimation du canal se fait par un modèle ARMA simplifié réactualisé par un filtrage de Kalman.

Dans le document [7], le canal (radio-mobile) est modélisé par un filtre RIF à la cadence symbole, entièrement variable dans le temps à cause des évanouissements dus aux trajets multiples, convolué par une forme d'onde de la taille d'une période symbole (donc courte devant le filtre RIF), connue, mais dans laquelle il faut estimer un paramètre de phase. L'estimation se fait là par un filtre de Kalman étendu, avec un canal de métrique sous forme de Gaussiennes additionnées.

Le problème du MLSE avec PSP est que c'est dès réception du premier échantillon de sortie corrélé à un symbole d'entrée donné qu'il fait conjointement l'estimation du canal et la détermination des survivants, sans attendre d'avoir reçu de nouveaux échantillons postérieurs qui peuvent pourtant donner de l'information supplémentaire pour établir les relations de survivance et les nouvelles estimations de canal qui en découlent. Cette limitation pénalise en particulier les canaux que nous qualifierons de non causaux, par exemple ceux caractérisés par une réponse impulsionnelle en forme de cloche.

L'invention permet de résoudre ce problème et d'améliorer la précision de la détection.

L'invention concerne donc un procédé de transmission d'informations utilisant un système de réception sur un canal de signaux de données par échantillonnage à l'aide de signaux d'horloge, dans lequel pour chaque symbole de la séquence d'entrée du canal à identifier, il y a N états possibles, appelés états, reliés chacun par P segments aux N états précédents, un algorithme de Viterbi en treillis permettant de calculer les métriques des différents segments et de choisir pour chaque état le chemin dont la métrique est minimale et définissant au moins un état survivant qui précède l'état présent, caractérisé en ce que le choix des survivants est retardé d'au moins une étape temporelle ou période symbole, et durant ce retard on mémorise tous les chemins issus des derniers états du treillis de Viterbi, réalisant à partir de ces derniers états une arborescence de segments sur une ou plusieurs étapes temporelles, puis on réalise le choix des survivants des états suivant les derniers états du treillis de Viterbi, et en ce que le choix des survivants pour les états les plus anciens de l'arbre, qui sont les premiers à ne pas être encore placés dans le treillis de Viterbi, tient compte des séquences possibles postérieures à ces états, lesquelles séquences sont représentées par les branches de l'arbre.

Les différents objets et caractéristiques de l'invention apparaîtront plus clairement dans la description qui va suivre et dans les figures annexées qui représentent :

- la figure 1, un exemple de fonctionnement du système de l'invention combinant un traitement appliquant l'algorithme de Viterbi et un traitement en arborescence pour une entrée binaire et un canal de taille N = 2 ;
- les figures 2a et 2b, un organigramme de décodage appliquant le système de l'invention ;
- la figure 2c, une variante de la figure 2b.

On va tout d'abord décrire de façon générale l'objet de l'invention.

Pour chacun des N états courants reçus, on choisit parmi les P segments qui relient cet état aux P états précédents possibles, le segment qui donnera à cet état la métrique minimale. Une métrique est la somme de la métrique d'un état précédent et de la métrique du segment qui le relie à l'état courant considéré. On appellera survivant de l'état courant l'état précédent correspondant au segment choisi.

On a défini pour chaque état courant un chemin unique qui y aboutit. A tout instant, il y a au plus N chemins au total.

La métrique de segment est le carré de la différence entre le dernier échantillon reçu et la valeur estimée de cet échantillon d'après ce qui suit :

- l'état courant,
- l'état précédent correspondant au segment,
- le chemin passé qui se termine à cet état précédent,
- tout ce qu'on sait du canal de transmission à cette date.

L'idée de l'invention est d'introduire un retard avant d'effectuer le choix des survivants. Durant ce retard, on mémorise tous les chemins issus des derniers états pour lesquels le choix des survivants avait été fait, dits derniers états du treillis. On a donc défini une arborescence qui se greffe aux N derniers états du treillis.

Les branches de l'arbre sont des successions de segments qui reçoivent une métrique de segment calculée comme précédemment. On garde en mémoire les métriques et les informations estimées sur le canal pour chaque branche.

Après un retard fixé, on déterminera les survivants des états du premier étage de l'arbre par la procédure décrite ci-dessous.

Pour chacun des N états courants, à l'étape temporelle suivant les derniers états du treillis, on trouvera dans le premier étage de l'arbre, P occurrences de cet état, définissant P segments reliant cet état aux derniers états du treillis. Il va falloir en choisir un, ce sera le survivant.

Pour chaque séquence donnée possible d'états postérieurs à l'état courant, on retient le chemin pour lequel la métrique trouvée à l'extrémité de l'arbre est la plus petite.

On attribue à ce chemin une fiabilité, qui vaut la valeur absolue de la différence entre les deux métriques les plus petites de l'ensemble des branches correspondant à cette séquence donnée postérieure à l'état courant.

On a déterminé un certain nombre de chemins candidats pouvant contenir le survivant. Parmi tous ces chemins candidats, on retiendra celui qui maximise la fiabilité. Le survivant de l'état courant considéré sera donc celui qui figure dans cette branche.

On élimine alors de l'arbre toutes les branches qui ne sont pas issues du survivant.

Lorsqu'on a déterminé tous les survivants, l'arbre a un étage de moins et a glissé vers le futur. On lui reconstituera un étage en prolongeant les branches avec un nouvel échantillon reçu, de nouveaux calculs de métrique et d'estimation de canal.

On va maintenant décrire de façon détaillée le procédé de l'invention. Soit N la taille de la réponse impulsionnelle d'un canal. Le treillis du décodeur de Viterbi aura donc $M^{N-1}$ états, où M est la taille de l'alphabet d'entrée, qui sont toutes les possibilités pour le N-1-uplet :

$$X_n = (x_n, x_{n-1}, \ldots x_{n-N+3}, x_{n-N+2})^T \quad (3)$$

Si on note H le vecteur des coefficients du canal (taille N) :

$$H = (h_0, h_1, \ldots h_{N-1})^T \quad (4)$$

on a une autre façon d'écrire la relation (1) :

$$Y_n = (X_n^T, x_{n-N+1})H + b_n \quad (5)$$

Supposons que le canal est non causal, c'est-à-dire:

$$\exists P > 0 / \forall_P < P, |h_p| \leq |h_p|$$

Alors il est évident que $y_n$ apportera plus d'information sur $X_{n-p}$ que sur $X_n$. Pourtant l'algorithme de Viterbi impose lorsque $y_n$ est reçu, de choisir le survivant de $X_n$ et non pas celui de $X_{n-P}$ qui a été choisi auparavant car il s'appuie sur la relation (5) qui met en jeu $X_n$, pour calculer la métrique. Faire un choix, c'est obligatoirement perdre de l'information. Le choix du survivant de $X_{n-P}$ et l'estimation conjointe de canal pour le PSP ont donc été faits P étapes trop tôt ; avant que l'on ne dispose de l'échantillon le plus informant sur $X_{n-P}$.

Tout l'intérêt de l'algorithme de Viterbi réside dans le fait de ne garder que des survivants plutôt que tous les chemins, ce qui allège la mémoire. Selon l'invention, pour la raison évoquée ci-dessus, on ne veut pas faire le choix des survivants pour les états les plus récents. On conserve momentanément toutes les hypothèses sur la séquence d'entrée et on prolonge donc le treillis de Viterbi par un arbre (de taille fixe) afin d'envisager toutes les possibilités.

Pour être le plus rigoureux, la profondeur de l'arbre doit être égale à la taille du canal soit N-1 (cela revient à attendre d'avoir reçu la totalité des échantillons corrélés à un état donné avant d'en déterminer le survivant). Mais on pourrait se contenter, pour simplifier, d'une profondeur égale à P (surtout si les coefficients de canal situés après l'indice P sont moins significatifs).

**MLSE (Maximum Likelihood Sequence Estimation) avec Per-Survivor Processing (PSP) tel qu'il est déjà connu**

On rappelle que l'algorithme MLSE avec PSP s'appuie sur un treillis de Viterbi, constitué des $M^{N-1}$ états possibles X*n pour l'étape temporelle n, tous éléments de $\mathcal{A}^{N-1}$ (alphabet) et ayant chacun M prédécesseurs possibles $X^*_{n-1}$ qui constituent l'ensemble $\mathcal{P}(X^*_n)$. En reprenant la notation en (3), on a :

$$\mathcal{P}(X^*_n) = \left\{ X^*_{n-1} = (x_{n-1}, \ldots x_{n-N+3}, x_{n-N+2}, a)^T, a \in \mathcal{A} \right\}$$

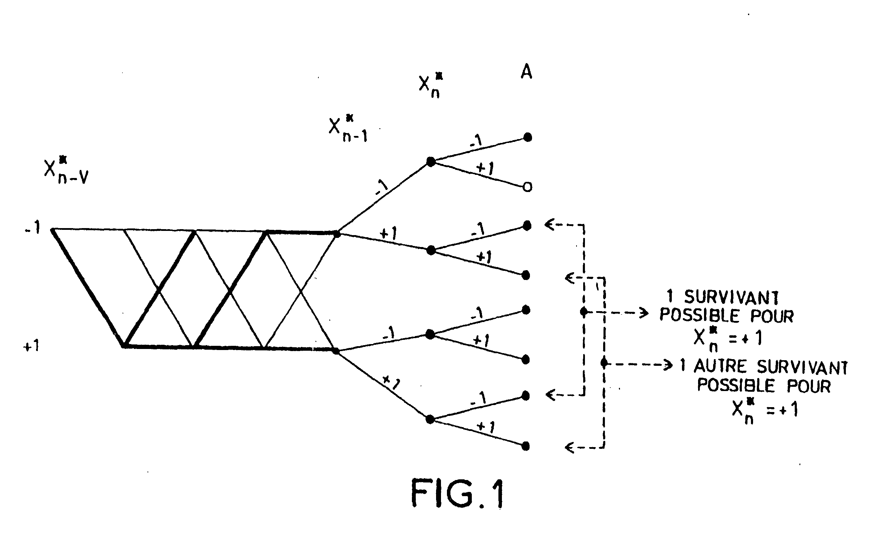

La figure 1 montre ce treillis pour M = 2 (alphabet binaire) et N=3.

On suppose que l'échantillon $y_{n-1}$ a été traité. A chaque état $X^*_{n-1}$ correspond donc un chemin unique qui se termine sur cet état, et une métrique $m(X^*_{n-1})$ ainsi qu'une estimation de canal $H^*(X^*_{n-1})$ associée à ce chemin. Dès réception de $y_n$, on considérera un à un tous les états possibles $X^*_n$, on en déterminera un survivant ainsi que la nouvelle métrique associée et l'estimation de canal rafraîchie.

Donc, pour chaque $X^*_n$, on examine chaque candidat survivant $X^*_{n-1}$ et on calcule l'erreur:

$$\forall\, X^{*}_{n-1} \in \mathscr{P}(X^{*}_{n})$$

$$e(X^{*}_{n-1}, X^{*}_{n}) = (y_n - (x^{*}_{n}, X^{*}_{n-1}{}^{T})H^{*}(X^{*}_{n-1}))^2 \quad (6)$$

(c'est la métrique de branche, inspirée de (5))
et on recalcule l'estimation de canal :

$$H^*(X^*_{n-1}, X^*_n) = H^*(X^*_{n-1}) + F(e(X^*_{n-1}, X^*_n)) \qquad (7)$$

où F représente une fonction d'adaptation quelconque. C'est là que le PSP s'ajoute au MLSE.

Le survivant est alors :

$$S(X^*_n) = \mathrm{Argmin}\{m(X^*_{n-1}) + e(X^*_{n-1}, X^*_n)\}$$

pour

$$X^{*}_{n-1} \in \mathscr{P}(X^{*}_{n}) \qquad\qquad (8)$$

Et on garde en mémoire pour l'état $X^*_n$ les paramètres d'après le survivant :

$$H^*(X^*_n) = H^*(S(X^*_n), X^*_n) \qquad (9)$$

$$m(X^*_n) = m(S(X^*_n)) + e(S(X^*_n), X^*_n) \qquad (10)$$

Une fois qu'on a fait ces calculs pour tous les états $X^*_n$, on fait sortir du décodeur le symbole $X^*_{n-V-N+2}$, symbole le plus ancien de l'état $X^*_{n-V}$. En effet, par le jeu du choix des survivants, on a abandonné, à chaque étape n, des chemins dans le treillis. Donc V est choisi pour être un entier suffisamment grand (de l'ordre de 15 ou 30) pour qu'il soit quasiment improbable que plus d'un chemin soit encore valide au rang n-V. V est appelé profondeur du treillis de Viterbi, à ne pas confondre avec la notion de profondeur d'arbre qui va suivre.

**MLSE arborescent avec un arbre de profondeur P = 1**

Pour le MLSE arborescent, on commence par procéder comme ci-dessus en reprenant les calculs de la métrique de branche (6) et du canal estimé (7) pour chaque état $X^*_n$. Mais le choix du survivant ne se fait pas tout de suite. Pour chaque couple $(X^*_{n-1}, X^*_n)$, on va conserver la métrique provisoire calculée comme en (10) :

$$m_p(X^*_{n-1}, X^*_n) = m(X^*_{n-1}) + e(X^*_{n-1}, X^*_n) \qquad (11)$$

et aussi l'estimation de canal provisoire, $H^*_p(X^*_{n-1}, X^*_n)$, d'après (7).

Puis on va explorer tous les N-1 uplets états postérieurs possibles :

$$A \in \mathcal{A}^{N-1}/X^{*}_{n} \in \mathscr{P}(A) \qquad\qquad (12)$$

Nous avons défini, rattaché à l'extrémité du treillis de Viterbi, un arbre dont les branches décrivent des chemins

$$(X^*_{n-1}, X^*_n, A)$$

La figure 1 illustre cet arbre dans le cas binaire pour un canal de taille N = 2.

Pour chaque séquence de l'arbre, on continue le calcul de métrique provisoire, en reprenant la relation (11), et le calcul de la métrique de branche d'après la formule (6), avec le nouvel échantillon $y_{n+1}$, et la dernière version du canal estimé provisoire $H^*_p(X^*_{n-1}, X^*_n)$ :

$$m_p(X^*_{n-1}, X^*_n, A) = m_p(X^*_{n-1}, X^*_n) + e(X^*_n, A) \qquad (13)$$

On calcule également la nouvelle estimation de canal provisoire pour cette branche, toujours en reprenant la relation (7) :

$$H^*_p(X^*_{n-1}, X^*_n, A) = H^*_p((X^*_{n-1}, X^*_n) + F(eX^*_n, A))) \qquad (14)$$

Maintenant que $y_{n+1}$, qui est un échantillon plus informant pour $X_n$ que $y_n$, a été intégré, le calcul du survivant de $X^*_n$ se fait ainsi : pour chaque A (répondant à (12)), on a un survivant possible :

$$S(X^*_n / A) = \text{Argmin}\{m_p((X^*_{n-1}, X^*_n, A)\}$$

pour

$$X^*_{n-1} \in \mathcal{P}(X^*_n) \qquad (15)$$

On définit le concurrent qui est le deuxième état après le survivant à minimiser cette métrique :

$$C(X^*_n / A) = \text{Argmin}\{m_p((X^*_{n-1}, X^*_n, A)\}$$

pour

$$X^*_{n-1} \in \mathcal{P}(X^*_n) - \{S(X^*_n / A)\} \qquad (16)$$

On va définir une valeur qui représente la fiabilité du survivant de $X^*_n$ selon A. Ce sera en fait le logarithme du rapport de vraisemblance entre le concurrent et le survivant :

$$f(X^*_n / A) = m_p(C(X^*_n / A), X^*_n, A) - m_p(S(X^*_{n/A}), X^*_n, A) \qquad (17)$$

Pour départager les choix proposés par tous les A, le survivant définitif est celui qui maximise la fiabilité:

$$S(X^*_n) = \text{Argmax}\{f(X^*_n / A)\} \text{ pour A vérifiant (12)} \qquad (18)$$

Après ce choix du survivant, l'arbre se simplifie d'un étage puisque toutes les branches comportant la suite

$(X^*_{n-1}, X^*_n)$ où $X^*_{n-1}$ est différent de $S(X^*_n)$ sont mortes.

On fait glisser l'arbre d'un indice temporel, les états A sont rebaptisés $X^*_{n+1}$, état dont on cherche maintenant le survivant. On décale les métriques provisoires et les estimations de canal :

$$m_p(X^*_n, X^*_{n+1}) = m_p(S(X^*_n), X^*_n, A=X^*_{n+1}) \qquad (19)$$

$$H_p(X^*_n, X^*_{n+1}) = H_p(S(X^*_n), X^*_n, A=X^*_{n+1}) \qquad (20)$$

(métrique et canal qui avaient été calculés en (13) et (14)).

Et puis on itère : on redéfinit de nouvelles branches aboutissant à de nouveaux états A qui vérifient (12) en remplaçant n par n+1. Puis on reprend la démarche décrite de (13) à (18).

## Généralisation à un arbre de profondeur quelconque

Pour un arbre de profondeur supérieure, on reprend la même démarche, mais au lieu de considérer un seul état A à la suite de l'état $X^*_n$ auquel on recherche un survivant, on va envisager toutes les branches représentant les séquences postérieures à $X^*_n$ possibles

$A_1, A_2, \dots A_p$
définies par :

$$X^*_n \in \mathscr{P}(A_1) \text{ et } \forall\, i < P, A_i \in \mathscr{P}(A_{i+1})$$

## Organigramme du procédé de l'invention

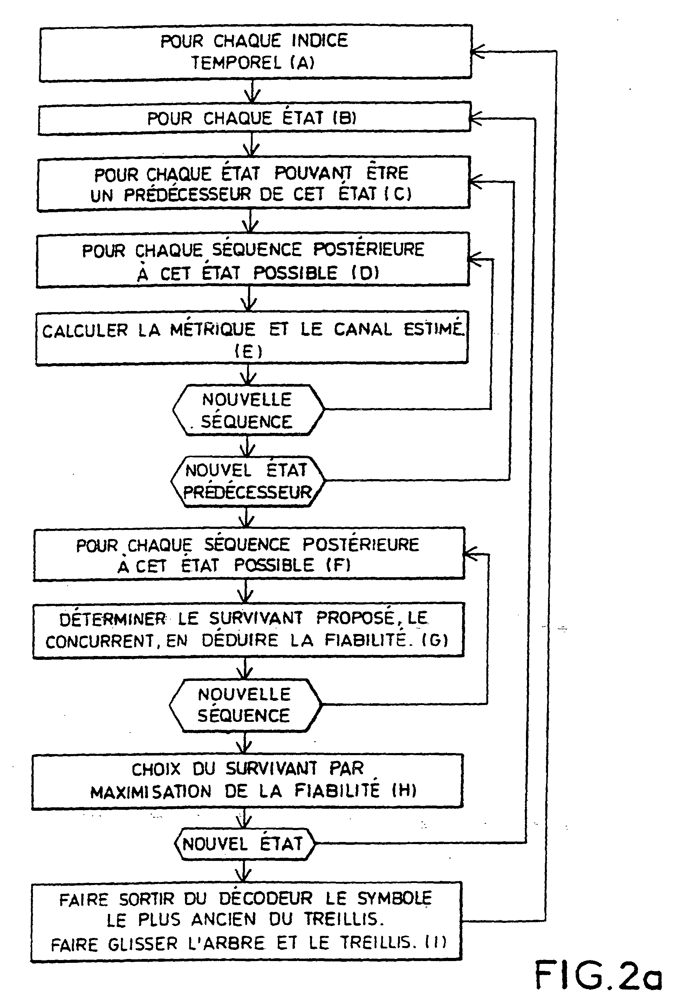

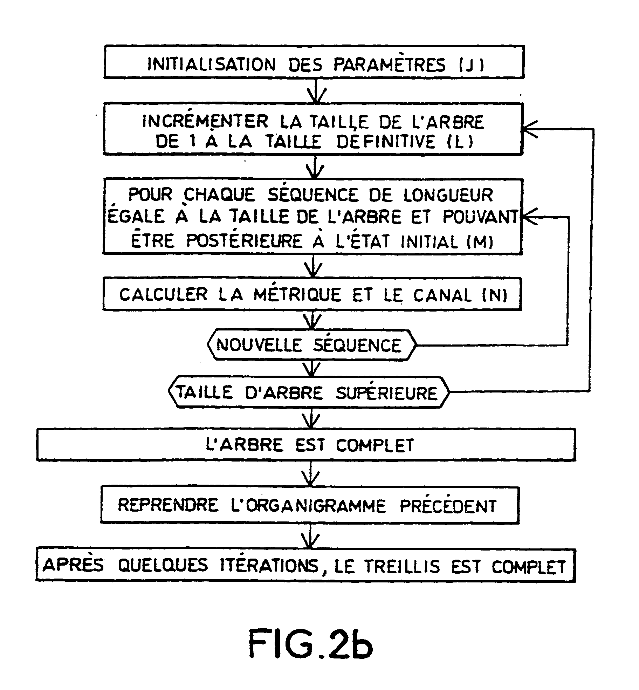

En se reportant aux figures 2a et 2b, on va maintenant décrire l'organigramme du procédé de l'invention.

Nous allons appliquer le principe du MLSE arborescent en choisissant l'algorithme LMS pour l'estimation adaptative du canal.

**Etape A :**

A chaque séquence, l'indice temporel, noté n, prend la valeur n+1.

**Etape B :**

On étudie chaque état $X_n = (x_n, x_{n-1}, \dots x_{n-N+3}, x_{n-N+2})^T$ figurant dans le premier étage de l'arbre, les états étant des vecteurs de dimension N-1.

**Etape C :**

Pour chaque état Xn, on examine tous les $X_n = (x_{n-1}, x_{n-2}, \dots X_{n-N+2}, x_{n-N+1})^T$ (à condition qu'ils figurent dans le treillis, ce qui n'est pas le cas lors de l'initialisation ou si on utilise un algorithme de Viterbi à treillis de complexité réduite documents [3] et [7]).

**Etape D :**

On considère toutes les séquences de symboles postérieurs possibles $(x_{n+1}, x_{n+2}, \dots x_{n+p})$ définies par toutes les séquences d'états $(X_{n+1}, \dots X_{n+p})$ autorisées par les lois de succession du treillis de Viterbi servant de base (tenir compte des treillis à complexité réduite).

**Etape E :**

On calcule l'erreur:

$$e = y_{n+p}-(X_{n+p}{}^T,x_{n+P-N+1})\,H(X_{n-1},X_n,...X_{n+P-1})$$

d'où la métrique :

$$m(X_{n-1},X_n,...X_{n+P}) = m(X_{n-1},X_n,...X_{n+P-1})+e^2$$

et le vecteur (de dimension N) des coefficients du canal estimé. L'estimation est adaptative selon l'algorithme LMS, en prenant la séquence définie en étapes (B), (C) et (D) comme signal d'entrée de canal présumé :

$$H(X_{n-1},X_n,...X_{n+P}) = H(X_{n-1},X_n,...X_{n+P-1})+\alpha e(X_{n+P},X_{n+P-1},...X_{n+P-N+1})^T$$

où $\alpha$ est un coefficient d'adaptation fixé. Par exemple $\alpha = 0,1$.

**Etape F :**

Une fois qu'on a exploré tous les états précédents $X_{n-1}$ de (C) et toutes les séquences suivantes de (D) pour un état $X_n$ donné en (B), on recommence à parcourir toutes les séquences suivantes comme en (D).

**Etape G :**

On détermine le survivant S et le concurrent C de $X_n$ selon la séquence considérée :

$$S(X_n\ 1\ X_{n+1},...X_{n+P}) = \text{Argmin}\{m(X_{n-1},X_n,...X_{n+P})\}$$

pour $X_{n-1}$ parcourant l'ensemble de tous les prédécesseurs autorisés de $X_n$.

$$C(X_n\ /\ X_{n+1},...X_{n+P}) = \text{Argmin}\{m(X_{n-1},X_n,...X_{n+P})\}$$

pour $X_{n-1}$ parcourant l'ensemble de tous les prédécesseurs autorisés de $X_n$ sauf $S(X_n\ /\ X_{n+1},...X_{n+P})$.

On en déduit la fiabilité :

$$f(S(X_n\ /\ X_{n+1},...X_{n+P})) = m(C(X_n\ /\ X_{n+1},...X_{n+P}),X_n,...X_{n+P}$$

$$-m(S(X_n\ /\ X_{n+1},...X_{n+P}),X_n,...X_{n+P})$$

**Etape H :**

Le survivant global maximise la fiabilité pour toutes les séquences postérieures envisagées :
$S(X_n) = \text{Argmax}\{f(S(X_n\ /\ X_{n+1}...X_{n+P}))\,\}$ pour $(X_{n+1}...X_{n+p})$ parcourant l'ensemble des séquences postérieures possibles.

**Etape 1 :**

Si n est supérieur à V (profondeur du treillis de Viterbi), on fait sortir du décodeur le symbole estimé $x_{n-V-N+2}$, symbole le plus ancien de l'état se trouvant à la racine du treillis. S'il n'y a pas une racine unique, faire un choix arbitraire en prenant par exemple la première racine rencontrée lors de l'exploration de ce qui reste du treillis pour la date n-V.
On élimine de la mémoire les branches mortes, c'est-à-dire celles pour lesquelles $X_n$ n'est pas précédé de $S(X_n)$ et on garde en mémoire les paramètres trouvés pour les survivants :

$$m(X_n,...X_{n+P}) = m(S(X_n),X_n,...X_{n+p})$$

$$H(X_n,...X_{n+P}) = H(S(X_n),X_n,...X_{n+P})$$

L'organigramme de la figure 2b complète celui de la figure 2a par le fait qu'il prévoit une initialisation et la réalisation d'une arborescence à la suite de l'algorithme de Viterbi.

Les étapes de l'organigramme de la figure 2a déjà décrite précédemment ne sont pas décrites à nouveau.

**Etape J :**

Initialisation des paramètres :

n=1

On dispose de $X_0$ état initial unique (comportant des symboles d'indice négatif que nous supposerons nuls, par exemple).

m(0) =0

H(0)= Vecteur initial donné. Par exemple, vecteur dont tous les indices ont pour valeur 0,1 sauf l'indice P qui aura pour valeur 1.

**Etape L :**

On incrémente la taille i de l'arbre de 1 à P.

**Etape M :**

On considère toutes les séquences de symboles $(x_1, x_2, x_3, ...x_i)$ définies par toutes les séquences d'états $(X_1, X_2, ...X_i)$ postérieurs à l'état initial $X_o$ et autorisées comme dans (D) par les fois de succession du treillis.

**Etape N :**

On calcule l'erreur :

$$e=y_i-(X_i{}^T,x_{i-N+1})H(X_0,...X_{i-1})$$

d'où la métrique :

$$m(X_0,... X_i) = m(X_0,...X_{i-1})+e^2$$

et le vecteur (de dimension N) des coefficients du canal estimé, comme en (E) :

$$H(X_0,...X_i) = H(X_0,...X_{i-1})+\alpha\ e(x_i,x_{i-1},...x_{i-N+1})^T$$

où $\alpha$ a été défini en (E).

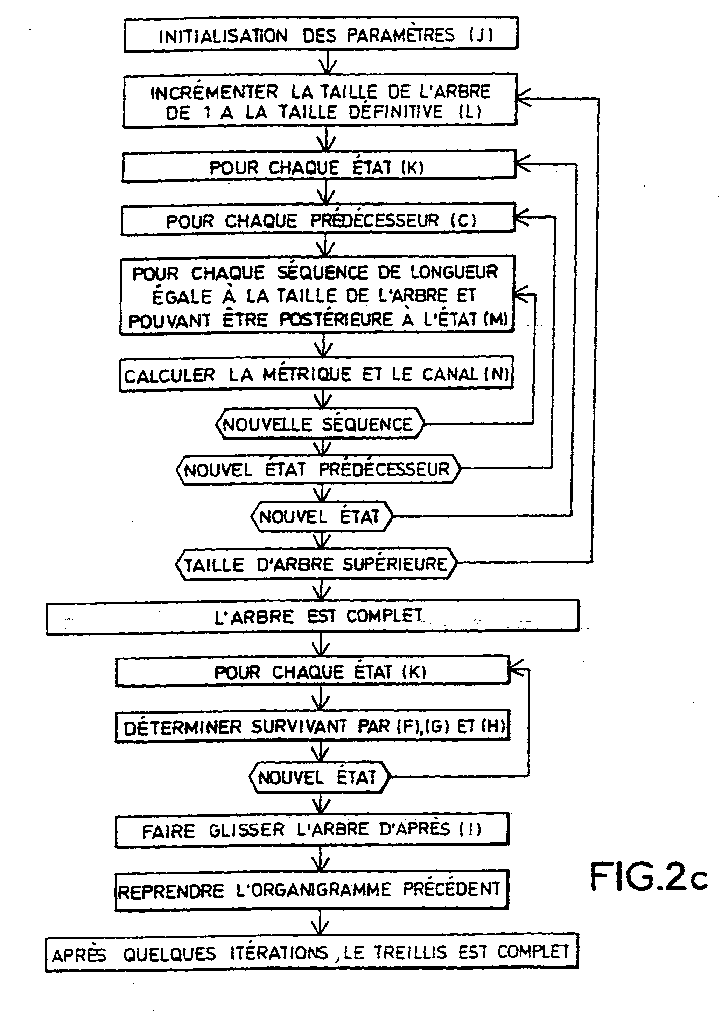

La figure 2c représente une variante de l'organigramme de la figure 2b dans un fonctionnement courant et plus complet de fonctionnement.

L'invention est particulièrement applicable à la réception sur canaux à Réponse Impulsionnelle Finie (RIF) dits non casaux, c'est-à-dire comportant des coefficients peu significatifs en début de réponse impulsionnelle, en particulier les canaux en forme de cloche. On peut rencontrer de tels canaux par exemple en enregistrement magnétique.

Mais d'une façon rigoureuse, cet algorithme améliore les performances du MLSE avec PSP sur tous les types de canaux de transmission RIF pour lesquels il s'adapte en aveugle.

Références :

(1 ) A.J. VITERBI et al, « Principles of Digital Communications on Coding », MC. Graw-Hill, 1979;
(2) G. David FORNEY, « Maximum-Likelihood Sequence Estimation of Digital Sequences in the presence of Intersymbot Interference », IEEE Transactions on information Theory, vol. IT-18, n° 3, pp; 363-378, May;

(3) NAMBIRAJAN SESHADRI, « Joint data and channel estimation using fast blind trellis search », brevet US-A-5 263 033, Juin 1990 ;

(4) Ricardo RAHELI, Andreas POLYDOROS, Ching-Kae TZOU, « The principle of per-survivor processing : A general approach to approximate and adaptive MLSE », IEEE GLOBECOM Global Communications Conference, pp; 1170-1175, D écembre 1991 ;

(5) Hélène SOUBARAS, « Procédé de transmission d'informations », demande de brevet français n° 95 00967 déposée le 27 Janvier 1995 ;

(6) Mark E. ROLLINS, Stanley J. SIMMONS, « A parallel reduced-complexity filtering algorithm for sub-optimal Kalman per-survivor processing », IEEE GLOBECOM Global Communications Conference, San Francisco, CA, pp; 8-12, 1994 ;

(7) Ronal A. ILTIS, « A Bayesian Maximum-Likelihood Sequence Estimation Algorithm for a priori Unknown Channels and Symbol Timing », IEEE Journal on Selected Areas in Communications, vol. 10, n° 3, pp. 579-588, Avril 1992 ;

(8) M. Vedat EYUBOGLU, Shadid U.H. QURESHI, « Reduced-State Sequence Estimation with Set partitioning and Decicion Feedback », IEEE Transactions on Communications, vol. 36, n° 1, pp. 13-20, January 1988.

**Revendications**

1. Procédé de transmission d'informations utilisant un système de réception sur un canal de signaux de données par échantillonnage à l'aide de signaux d'horloge, dans lequel pour chaque symbole de la séquence d'entrée du canal à identifier, il y a N états possibles, appelés états, reliés chacun par P segments aux N états précédents, un algorithme de Viterbi en treillis permettant de calculer les métriques des différents segments et de choisir pour chaque état le chemin dont la métrique est minimale et définissant au moins un état survivant qui précède l'état présent, **caractérisé en ce que** le choix des survivants est retardé d'au moins une étape temporelle ou période symbole, et durant ce retard on mémorise tous les chemins issus des derniers états du treillis de Viterbi, réalisant à partir de ces derniers états une arborescence de segments sur une ou plusieurs étapes temporelles, puis on réalise le choix des survivants des états suivant les derniers états du treillis de Viterbi, et **en ce que** le choix des survivants pour les états les plus anciens de l'arbre, qui sont les premiers à ne pas être encore placés dans le treillis de Viterbi, tient compte des séquences possibles postérieures à ces états, lesquelles séquences sont représentées par les branches de l'arbre.

2. Procédé selon la revendication 1, **caractérisé en ce que** pour chacun des états les plus anciens de l'arbre, et pour chaque séquence possible postérieure à cet état, on définit un survivant, qui est un état précédent qui minimise la métrique en bout de branche, un concurrent qui est un état précédent qui minimise la métrique en bout de branche hormis le survivant et une fiabilité, qui est une différence entre la métrique du concurrent et celui du survivant.

3. Procédé selon la revendication 2, **caractérisé en ce que** pour chacun des états les plus anciens de l'arbre, on choisit un survivant global, indépendant de la séquence postérieure possible comme étant le survivant associé à la fiabilité maximale trouvée parmi toutes les séquences possibles postérieures à cet état.

4. Procédé selon la revendication 3, **caractérisé en ce qu'**un ou des paramètre(s) du canal de transmission non connus a priori sont estimés adaptativement pour chaque chemin envisagé en tenant compte de la séquence des symboles qui constituent ce chemin.

**Claims**

1. Procedure for transmitting information using a reception system on a data signal channel based on sampling using clock signals, in which, for each symbol of the input sequence of the channel to be identified, there are N possible states, called states, each linked by P segments to the N preceding states, a trellis Viterbi algorithm for calculating the metrics of the various segments and choosing for each state the path for which the metric is minimal and defining at least one surviving state that precedes the present state, **characterized in that** the choice of survivors is delayed by at least one temporal step or symbol period, and, during this delay, all the paths deriving from the latest states of the Viterbi trellis are stored, producing from the latter states a tree structure of segments over one or more temporal steps, then the survivors of the states are chosen according to the latest states of the Viterbi trellis, and **in that** the choice of survivors for the oldest states of the tree, which are the first not to be still placed in the Viterbi trellis, takes account of the possible sequences subsequent to these states, which sequences are represented by the branches of the tree.

2. Procedure according to Claim 1, **characterized in that** for each of the oldest states of the tree and for each possible sequence subsequent to that state, a survivor, which is a preceding state which minimizes the metric at the end of the branch, a competitor which is a preceding state which minimizes the metric at the end of the branch apart from the survivor and a reliability, which is a difference between the metric of the competitor and that of the survivor, are defined.

3. Procedure according to Claim 2, **characterized in that** for each of the oldest states of the tree, an overall survivor is chosen, independent of the possible subsequent sequence, as being the survivor associated with the maximum reliability found among all the possible sequences subsequent to this state.

4. Procedure according to Claim 3, **characterized in that** one or more of the a priori unknown transmission channel parameters are estimated adaptively for each path considered taking into account the sequence of the symbols that make up this path.

**Patentansprüche**

1. Verfahren zur Übertragung von Informationen, das ein System zum Empfang von Signaldaten auf einem Kanal durch Abtastung mit Hilfe von Taktsignalen verwendet, bei dem es für jedes zu identifizierende Symbol der Eingangsfolge des Kanals N mögliche Zustände gibt, die Zustände genannt werden, die je über P Segmente mit den N vorhergehenden Zuständen verbunden sind, wobei ein trellisförmiger Viterbi-Algorithmus es ermöglicht, die Metriken der verschiedenen Segmente zu berechnen und für jeden Zustand den Weg mit der kleinsten Metrik zu wählen, und mindestens einen überlebenden Zustand definiert, der dem aktuellen Zustand vorausgeht, **dadurch gekennzeichnet, dass** die Wahl der überlebenden Zustände um mindestens einen Zeitschritt oder eine Symbolperiode verzögert wird, und während dieser Verzögerung alle aus den letzten Zuständen des Viterbi-Trellis kommenden Wege gespeichert werden, wobei ausgehend von diesen letzten Zuständen ein Baumgraph von Segmenten über einen oder mehrere Zeitschritte erzeugt wird, und dass dann die Wahl der überlebenden Zustände nach den letzten Zuständen des Viterbi-Trellis durchgeführt wird, und dass bei der Wahl der überlebenden Zustände für die ältesten Zustände des Baums, die als erste nicht mehr im Viterbi-Trellis angeordnet werden, mögliche spätere Folgen nach diesen Zuständen berücksichtigt werden, wobei diese Folgen durch die Zweige des Baums dargestellt werden.

2. Verfahren nach Anspruch 1, **dadurch gekennzeichnet, dass** für jeden der ältesten Zustände des Baums und für jede mögliche Folge nach diesem Zustand ein überlebender Zustand, der ein vorhergehender Zustand ist, der die Metrik am Ende des Zweigs minimiert, ein Konkurrent, der ein vorhergehender Zustand ist, der die Metrik am Ende des Zweigs abgesehen vom überlebenden Zustand minimiert, und eine Zuverlässigkeit definiert werden, die eine Differenz zwischen der Metrik des Konkurrenten und derjenigen des überlebenden Zustands ist.

3. Verfahren nach Anspruch 2, **dadurch gekennzeichnet, dass** für jeden der ältesten Zustände des Baums ein globaler überlebender Zustand, der unabhängig von der möglichen späteren Folge ist, als der überlebende Zustand gewählt wird, der der maximalen Zuverlässigkeit zugeordnet ist, die unter allen möglichen späteren Folgen als dieser Zustand gefunden wurde.

4. Verfahren nach Anspruch 3, **dadurch gekennzeichnet, dass** einer oder mehrere Parameter des Übertragungskanals, die zunächst nicht bekannt sind, adaptiv für jeden in Betracht gezogenen Weg geschätzt werden, unter Berücksichtigung der Folge von Symbolen, die diesen Weg bilden.

FIG.1

$X_{n-V}^{\textbf{*}}$

$X_{n-1}^{\textbf{*}}$

$X_{n}^{\textbf{*}}$

A

-1

+1

-1

+1

-1

+1

-1

-1

+1

-1

+1

-1

+1

-1

+1

1 SURVIVANT POSSIBLE POUR $X_{n}^{\textbf{*}} = +1$

1 AUTRE SURVIVANT POSSIBLE POUR $X_{n}^{\textbf{*}} = +1$

EP 0 925 671 B1

```
┌─────────────────────────────────┐
│      POUR CHAQUE INDICE         │◄────────┐
│         TEMPOREL (A)            │         │
└─────────────────────────────────┘         │
                │                            │
                ▼                            │
┌─────────────────────────────────┐         │
│      POUR CHAQUE ÉTAT (B)       │◄──────┐ │
└─────────────────────────────────┘       │ │
                │                          │ │
                ▼                          │ │
┌─────────────────────────────────┐       │ │
│    POUR CHAQUE ÉTAT POUVANT ÊTRE│◄────┐ │ │
│  UN PRÉDÉCESSEUR DE CET ÉTAT (C)│     │ │ │
└─────────────────────────────────┘     │ │ │
                │                        │ │ │
                ▼                        │ │ │
┌─────────────────────────────────┐     │ │ │
│  POUR CHAQUE SÉQUENCE POSTÉRIEURE│◄──┐ │ │ │
│    À CET ÉTAT POSSIBLE (D)      │   │ │ │ │
└─────────────────────────────────┘   │ │ │ │
                │                      │ │ │ │
                ▼                      │ │ │ │
┌─────────────────────────────────┐   │ │ │ │
│  CALCULER LA MÉTRIQUE ET LE     │   │ │ │ │
│     CANAL ESTIMÉ (E)            │   │ │ │ │
└─────────────────────────────────┘   │ │ │ │
                │                      │ │ │ │
                ▼                      │ │ │ │
         ╱────────────╲               │ │ │ │
        │  NOUVELLE    │──────────────┘ │ │ │
        │  SÉQUENCE    │                │ │ │
         ╲────────────╱                 │ │ │
                │                        │ │ │
                ▼                        │ │ │
         ╱────────────╲                 │ │ │
        │ NOUVEL ÉTAT  │────────────────┘ │ │
        │ PRÉDÉCESSEUR │                  │ │
         ╲────────────╱                   │ │
                │                          │ │
                ▼                          │ │
┌─────────────────────────────────┐       │ │
│  POUR CHAQUE SÉQUENCE POSTÉRIEURE│◄──┐   │ │
│    À CET ÉTAT POSSIBLE (F)      │   │   │ │
└─────────────────────────────────┘   │   │ │
                │                      │   │ │
                ▼                      │   │ │
┌─────────────────────────────────┐   │   │ │
│  DÉTERMINER LE SURVIVANT PROPOSÉ,│   │   │ │
│  LE CONCURRENT, EN DÉDUIRE LA   │   │   │ │
│      FIABILITÉ. (G)             │   │   │ │
└─────────────────────────────────┘   │   │ │
                │                      │   │ │
                ▼                      │   │ │
         ╱────────────╲               │   │ │
        │  NOUVELLE    │──────────────┘   │ │
        │  SÉQUENCE    │                  │ │
         ╲────────────╱                   │ │
                │                          │ │
                ▼                          │ │
┌─────────────────────────────────┐       │ │
│   CHOIX DU SURVIVANT PAR        │       │ │
│  MAXIMISATION DE LA FIABILITÉ (H)│      │ │
└─────────────────────────────────┘       │ │
                │                          │ │
                ▼                          │ │
         ╱────────────╲                    │ │
        │ NOUVEL ÉTAT  │───────────────────┘ │
         ╲────────────╱                      │
                │                            │
                ▼                            │
┌─────────────────────────────────┐         │
│  FAIRE SORTIR DU DÉCODEUR LE    │         │
│  SYMBOLE LE PLUS ANCIEN DU      │─────────┘
│  TREILLIS.                      │
│  FAIRE GLISSER L'ARBRE ET LE    │
│      TREILLIS. (I)              │
└─────────────────────────────────┘
```

# FIG.2a

INITIALISATION DES PARAMÈTRES (J)

INCRÉMENTER LA TAILLE DE L'ARBRE DE 1 À LA TAILLE DÉFINITIVE (L)

POUR CHAQUE SÉQUENCE DE LONGUEUR ÉGALE À LA TAILLE DE L'ARBRE ET POUVANT ÊTRE POSTÉRIEURE À L'ÉTAT INITIAL (M)

CALCULER LA MÉTRIQUE ET LE CANAL (N)

NOUVELLE SÉQUENCE

TAILLE D'ARBRE SUPÉRIEURE

L'ARBRE EST COMPLET

REPRENDRE L'ORGANIGRAMME PRÉCÉDENT

APRÈS QUELQUES ITÉRATIONS, LE TREILLIS EST COMPLET

# FIG.2b

```
┌─────────────────────────────────────────┐
│   INITIALISATION DES PARAMÈTRES (J)      │
└─────────────────────────────────────────┘
                    ↓
┌─────────────────────────────────────────┐
│   INCRÉMENTER LA TAILLE DE L'ARBRE       │←──┐
│   DE 1 A LA TAILLE DÉFINITIVE (L)        │   │
└─────────────────────────────────────────┘   │
                    ↓                          │
┌─────────────────────────────────────────┐   │
│        POUR CHAQUE ÉTAT (K)              │←─┐│
└─────────────────────────────────────────┘  ││
                    ↓                         ││
┌─────────────────────────────────────────┐  ││
│    POUR CHAQUE PRÉDÉCESSEUR (C)          │←┐││
└─────────────────────────────────────────┘ │││
                    ↓                        │││
┌─────────────────────────────────────────┐ │││
│  POUR CHAQUE SÉQUENCE DE LONGUEUR        │←┼┼┼
│  ÉGALE À LA TAILLE DE L'ARBRE ET         │ │││
│  POUVANT ÊTRE POSTÉRIEURE À L'ÉTAT (M)   │ │││
└─────────────────────────────────────────┘ │││
                    ↓                        │││
┌─────────────────────────────────────────┐ │││
│   CALCULER LA MÉTRIQUE ET LE CANAL (N)   │ │││
└─────────────────────────────────────────┘ │││
                    ↓                        │││
         ⬡ NOUVELLE SÉQUENCE ⬡ ─────────────┘││
                    ↓                         ││
       ⬡ NOUVEL ÉTAT PRÉDÉCESSEUR ⬡ ─────────┘│
                    ↓                          │
            ⬡ NOUVEL ÉTAT ⬡ ──────────────────┘
                    ↓
        ⬡ TAILLE D'ARBRE SUPÉRIEURE ⬡
                    ↓
┌─────────────────────────────────────────┐
│          L'ARBRE EST COMPLET             │
└─────────────────────────────────────────┘
                    ↓
┌─────────────────────────────────────────┐
│        POUR CHAQUE ÉTAT (K)              │←─┐
└─────────────────────────────────────────┘  │
                    ↓                         │
┌─────────────────────────────────────────┐  │
│  DÉTERMINER SURVIVANT PAR (F),(G) ET (H) │  │
└─────────────────────────────────────────┘  │
                    ↓                         │
            ⬡ NOUVEL ÉTAT ⬡ ─────────────────┘
                    ↓
┌─────────────────────────────────────────┐
│    FAIRE GLISSER L'ARBRE D'APRÈS (I)     │
└─────────────────────────────────────────┘
                    ↓
┌─────────────────────────────────────────┐
│  REPRENDRE L'ORGANIGRAMME PRÉCÉDENT      │
└─────────────────────────────────────────┘
                    ↓
┌─────────────────────────────────────────┐
│ APRÈS QUELQUES ITÉRATIONS, LE TREILLIS   │
│ EST COMPLET                              │
└─────────────────────────────────────────┘
```

FIG.2c